# EUROPEAN PATENT APPLICATION

(11) **EP 3 748 538 A1**
(43) Date of publication of application: **09.12.2020**
(21) Application number: 19178297.8
(22) Date of filing: 04.06.2019
(51) Int. Cl.: G06K 9/20, G06K 9/62, G06T 7/00

(54) **IDENTIFICATION OF STRUCTURAL IMPERFECTIONS ON A REFLECTIVE SURFACE**

(71) Applicant: Gruet, Alexis, 2775-615 Carcavelos - Junqueiro (PT); Doan, Thien, 1200-363 Lisboa (PT); Mur, Thomas, Natitingou (BJ); Carmel Zappoli, Nicolas, 1213 Petit Lancy Genève (CH)
(72) Inventor: Gruet, Alexis, 2775-615 Carcavelos - Junqueiro (PT); Doan, Thien, 1200-363 Lisboa (PT); Mur, Thomas, Natitingou (BJ); Carmel Zappoli, Nicolas, 1213 Petit Lancy Genève (CH)
(74) Representative: Bandpay & Greuter

(57) **Abstract**

The invention notably relates to a computer-implemented method for identifying structural imperfections on a reflective surface. The method comprises providing an image, the image representing one or more paths each of a reflection on the reflective surface of a light source in motion relative to and over the reflective surface. The method also comprises identifying a number of structural imperfections in the image with a neural network configured to provide an output number of structural imperfections in an input image, the identifying comprising applying the neural network to at least a portion of the image. This forms an improved solution for identifying structural imperfections on a reflective surface.

## Description

### FIELD OF THE DISCLOSURE

The disclosure relates to the field of computer programs and systems, and more specifically to methods, systems and programs for identifying structural imperfections on a reflective surface.

### BACKGROUND

Identification of impacts and more generally deformations of different surfaces of industrial products is an important process, in particular at the time of maintenance and/or after manufacturing.

Notably, surfaces of vehicles are in contact with the exterior and therefore the subject of road and climate hazards. These hazards result in structural imperfections appearing on such surfaces, and their repair often requires work of a specialist.

To repair the surfaces, specialists often first identify, with their naked eyes, the structural imperfections on a surface to be repaired. This is a lengthy process which is prone to human error. Other methods which make use of reflective properties of the surfaces to detect structural imperfections exist.

Some of these methods use arches with light sources fixed on them. Vehicles traverse one of these arches in order to detect structural imperfections on the reflective surfaces of the vehicle. However, the relative movement of the vehicle with respect to the arch can lead to multiple counts for a same structural imperfection, and the positioning of detected structural imperfections is inaccurate.

Other of these methods involve enclosed spaces where the vehicle is surrounded by blinking lights. However, the accuracy of such methods is low, the energy consumption associated to the blinking lights is high and they are often fixed to one place (the enclosed space is difficult to displace).

Within this context, there is still a need for an improved method for identifying structural imperfections on a reflective surface.

### SUMMARY

It is therefore provided a computer-implemented method for identifying structural imperfections on a reflective surface. The method comprises providing an image, the image representing one or more paths each of a reflection on the reflective surface of a light source in motion relative to and over the reflective surface; and identifying a number of structural imperfections in the image with a neural network configured to provide an output number of structural imperfections in an input image, the identifying comprising applying the neural network to at least a portion of the image.

The method may comprise any one or more of the following:
- providing the image comprises providing a video recording device and one or more light sources, putting the one or more light sources in motion relative to and over the reflective surface, capturing, with the video recording device and during the motion of the one or more light sources, frames of the reflective surface, the video recording device being fixed relative to the reflective surface during the capturing, and determining the image based on the frames, each path being of a reflection on the reflective surface of a respective one of the one or more light sources;
- the one or more light sources comprise an array of light sources;
- determining the image comprises aggregating the frames;
- putting the one or more light sources in motion comprises sweeping the one or more light sources over the reflective surface;
- the sweeping is iterated in different directions;
- the identifying comprises, for each iteration of the sweeping, determining a respective image and applying the neural network to at least a portion of the respective image;
- during the capturing, two consecutive frames are captured at a given time interval and the reflection of the light source moves 5mm or less on the reflective surface during the given time interval;
- extracting several portions of the image and applying the neural network to each portion individually; and
- the structural imperfections on the reflective surface are impacts, and/or the reflective surface is a body surface of a vehicle.

It is further provided a computer-implemented method for training a neural network configured for the identifying of the method. The training comprises providing a dataset including respective images, each respective image representing one or more paths each of a reflection on the reflective surface of a light source in motion relative to and over a reflective surface; and training the neural network with the dataset.

Providing a dataset for the training may further comprise capturing, with a video recording device, frames of a reflective surface, the capturing being performed during motion of one or more light sources over and relative to the reflective surface, the video recording device being fixed relative to the reflective surface during the capturing; determining, based on the frames, an unannotated image representing one or more paths each of a reflection on the reflective surface of a respective one of the one or more light sources; and then annotating the unannotated version of the image to identify a number of structural imperfections in the image.

It is further provided a data structure representing a neural network learnable according to the training method.

It is further provided a computer program comprising instructions for performing the method.

It is further provided a computer program comprising instructions for learning the neural network and/or comprising the data structure.

It is further provided a data storage medium having recorded thereon any one or more of the programs and data structure.

It is further provided a system comprising a processor coupled to a memory, the memory having stored thereon any of the computer programs. The system may further comprise, coupled to the processor, one or more light sources and a video recording device.

### BRIEF DESCRIPTION OF THE DRAWINGS

Embodiments will now be described, by way of non-limiting example, and in reference to the accompanying drawings, where:
- FIG. 1 shows a workflow of the method;
- FIG. 2 shows an example of determining the image of the method;
- FIG. 3 shows an example of a workflow for training the neural network of the method;
- FIG. 4 shows an example of a workflow for providing a dataset for training the neural network of the method;
- FIG. 5 shows an example of the system; and
- FIGs. 6-13 illustrate examples of the method.

### DETAILED DESCRIPTION

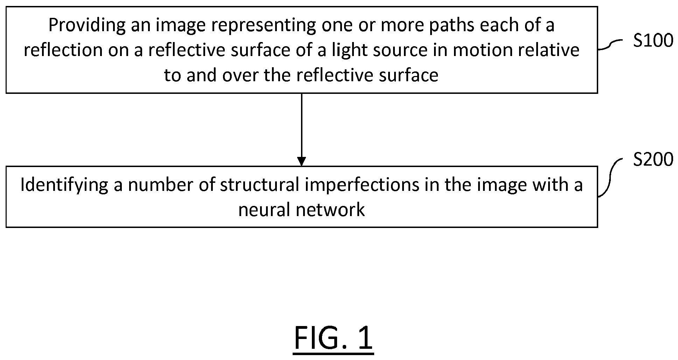

With reference to the flowchart of FIG. 1, it is proposed a computer-implemented method for identifying structural imperfections on a reflective surface. The method comprises providing S100 an image. The image represents one or more paths. Each path is a path of a reflection on the reflective surface. The reflection is a reflection of a light source in motion relative to and over the reflective surface. The method further comprises identifying S200 a number of structural imperfections in the image. The identifying S200 is performed with a neural network. The neural network is configured to provide an output number of structural imperfections in an input image. The identifying S200 comprises applying the neural network to at least a portion of the image. Such a method forms an improved solution for the identification of structural imperfections on a reflective surface.

Notably, the use of a reflection on the reflective surface of a light source allows to highlight the presence of a structural imperfection. Indeed a path followed by the reflection is altered when traversing a structural imperfection, even when the structural imperfection is small. In examples, a structural imperfection may involve a local deformation of the shape of the reflective surface. The reflection of a light source passing over such a local deformation results in the reflection being deformed due to the local changes of the shape of the reflective surface. Thus, the path of the reflection (*i.e.* the different positions of the reflection on the reflective surface during the motion) is altered around the deformation.

In addition, the accuracy of the identification of structural imperfections is increased with the use of the neural network. Indeed, the use of the neural network allows an accurate and automatic identification and count of the structural imperfections. Notably, neural networks are particularly accurate at identifying features (e.g. structural imperfections) in an image.

In examples, the method outputs a count of the amount of structural imperfections identified with the neural network. The count may be zero, for example when no structural imperfections are present on the reflective surface. Alternatively or additionally, the method may also output a position for each structural imperfection identified. In examples, the position of the structural imperfections are highlighted on an image of the reflective surface (e.g. the image provided at S100 or another image of the reflective surface involved with providing the image at S100). The highlighting may comprise any visual indication enabling visual positioning of identified structural imperfections, for example circling the positions of the structural imperfections. This facilitates locating structural imperfections on the reflective surface, for example in view of repairing the reflective surface (i.e. structurally processing the reflective surface so as to take away one or more structural imperfections). In examples, the neural network may additionally and/or alternatively be configured to determine a size of a structural imperfection. The size may correspond to an area of the reflective surface deformed by the structural imperfection. For example, the area may be defined as a disk on the reflective surface centered around the structural imperfection. In examples, the size may be determined as a number of pixels. Additionally and alternatively, a reference length may be provided, and the size may be determined as an absolute value.

A structural imperfection is a defect (e.g. a deformation) of the reflective surface. The defect may be an impact (e.g. permanent) on the reflective surface. The impact may result from a collision between the reflective surface and another object. The impact may be a dent and/or a bump on the reflective surface. In examples, the impact may result from a collision between the reflective surface and hail and/or small objects (e.g. stones). In examples, the impact may result from an unintended collision on the reflective surface at some point in the production/manufacturing line of the reflective surface. The method may thus identify a number of impacts on the reflective surface.

In examples, an impact on the reflective surface may have a diameter higher than one millimeter and/or lower than one meter, and/or a depth higher than one millimeter and/or lower than one meter.

The reflective surface may be any surface capable of reflecting light (*i.e.* such that an image of a light source is formed/visible on the reflective surface). The reflective surface may be a smooth surface. In examples, the reflective surface may be a metallic surface.

In examples, the reflective surface may belong to a vehicle or a part of a vehicle (e.g. car, truck, motorcycle). For example, the reflective surface may be a part of the the body of the vehicle (i.e. a sheet metal surface of the vehicle in contact with the outside, painted so as to be reflective). In other examples, the reflective surface may belong to a home appliance or to a part of a home appliance.

The one or more paths may be visible on the image provided at S100. In examples, the image simultaneously comprises the reflection of the light source at different positions. The different positions correspond to positions (*e.g*. all the positions) of the reflection on the reflective surface of the light source at different times during the motion. This increases the accuracy of the identification of structural imperfections with the neural network. Indeed, the one or more visible paths deviate at the neighborhood of a structural imperfection (*e.g*. the path may circle around the imperfection, split, become discontinuous and/or disappear at the neighborhood of the structural imperfection). Neural networks are particularly apt at identifying such deviations in an image.

The one or more paths on the image provided at S100 may form a geometrical pattern on the reflective surface. A geometrical pattern is a regular and structured arrangement of geometric shapes. The geometric shapes may repeat themselves. A repetition of a geometric shape may have some differences with respect to other repetitions in the geometrical pattern. The pattern may be formed over only a portion of the reflective surface. In other words, multiple paths of the one or more paths on the reflective surface may be simultaneously visible in the image.

The geometrical pattern appearing on the reflective surface and visible on the image further improves the accuracy of the identification of structural imperfections on the reflective surface. Indeed, the pattern facilitates the identification performed by the neural network. For example, more than one path may be deviated at the neighborhood of a same structural imperfection, which facilitates its identification with the neural network.

The geometrical pattern may be a substantially ordered pattern of lines (*e.g*. the lines may be locally disordered around a structural imperfection). Each line of the pattern of lines may represent one path. Each line may comprise a straight portion and/or a curved portion. In examples, the lines of the pattern may form strips of lines (*i.e.* substantially parallel lines) on the reflective surface. In examples, the lines of the pattern may form a grid over the reflective surface.

In examples, the method comprises displaying image and the one or more paths forming the geometrical pattern on the image, and the method comprises highlighting identified structural imperfections on the displayed image. This facilitates locating structural imperfections on the reflective surface. Indeed, the pattern on the image gives a spatial reference. This spatial reference facilitates matching the position of the highlighted structural imperfections with the position of the structural imperfections on the reflective surface.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

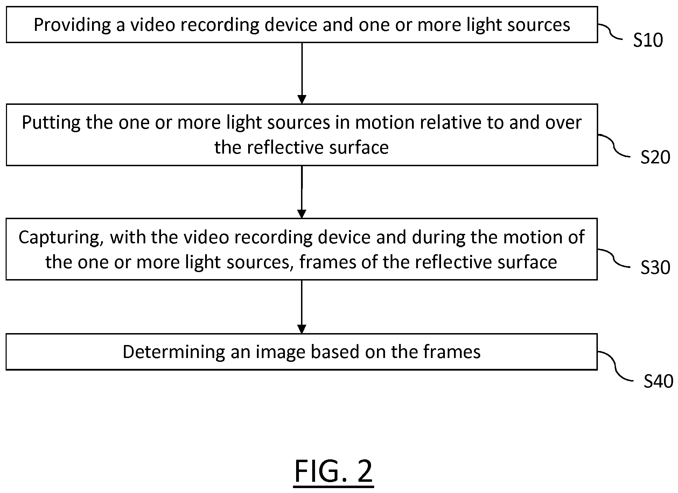

Referring now to FIG. 2, providing the image at S100 may comprise determining the image (*e.g.* from scratch). In this case, providing the image may comprise providing S10 a video recording device and one or more light sources. Providing the image may further comprise putting S20 the one or more light sources in motion relative to and over the reflective surface. Providing the image may further comprise capturing S30, with the video recording device and during the motion of the one or more light sources, frames of the reflective surface. The video recording device may be fixed relative to the reflective surface during the capturing S30. Providing the image may further comprise determining S40 the image based on the frames. Each path (represented in the image determined at S40) is a path of a reflection on the reflective surface of a respective one of the one or more light sources. Providing the image in such a manner improves the identification of structural imperfections on the reflective surface.

Notably, the number of artifacts leading to false positive identifications of structural imperfections are reduced. Indeed, the reflective surface is fixed relative to the video recording device during the recording. This avoids identifying a same structural imperfection twice due to movement of the reflective surface which could change the positions of the structural imperfections during the recording.

In addition, the energy consumption when providing the image in such a manner is relatively small. Indeed, relative motion of the one or more light sources with respect to the reflective surface allows respective reflections of each of the one or more light sources to cover a length of the reflective surface larger than the length of any one of the one or more light sources. Thus, the one or more light sources need not be overly large.

In addition, the providing of the image only requires two pieces of hardware: one or more light sources and a video recording device. This may allow the determining of the image to be portable and easy to handle. In examples, multiple reflective surfaces belong to a same object (e.g. a vehicle or a home appliance). The method may comprise providing respective images for the multiple reflective surfaces and identifying structural imperfections according to S200 based on the respective images. The portability of the hardware may facilitate provision of the respective images. Indeed, the position of the video recording device merely needs to be shifted so as to view one of the multiple reflective surfaces and reflection of the one or more light sources. Alternatively, the multiple surfaces may be captured simultaneously by the video recording device. For example, one or more video recording devices may simultaneously capture different points of view of the reflective surface. The one or more recording devices may be fixed in a structure. In examples several recording devices are simultaneously used, for example, mounted on an arch.

In addition, the image is determined form the frames captured at S30. Thus, the determining at S40 is fast and allows to see in real time the paths on the image as the respective reflections of the one or more light sources move on the reflective surface. This may allow a first preliminary assessment on the amount of structural deformations on the reflective surface (e.g. to visually determine if there are many impacts or few impacts). A purely analog system would require the one or more light sources to finish their relative movement before the paths would become visible.

In addition, the determining at S40 may comprise resizing and/or filtering and/or increase gain on any of the frames This improves the quality of the determined image.

In examples the video recording device may be communicatively coupled to a memory for storing the captured frames.

In S20, either the one or more light sources are moved relative to the reflective surface, The movement may be performed automatically (e.g. with a drone and/or a fixed/mobile structure) or manually by a user.

A reflection of one of the one or more light sources is an image of the light source visible on the reflective surface. The image of the light source may be more or less distorted depending on the shape of the reflective surface. Typically the image of the light source on the reflective surface may be a light spot (*e.g*. a circular or oval shaped light spot).

In examples, the one or more light sources may comprise (*e.g*. partly or entirely of) LED lights and/or neon lights. In examples, the one or more light sources may be light sources comprising a circular or oval shape and having a small size, for example larger than two millimeters and/or smaller than ten centimeters.

In S30, the video recording device captures (*i.e.* records) frames (*e.g.* chronologically sequential pictures/images), of the reflective surface, on which the one or more reflections move during the motion.

In examples, during the capturing S30, the one or more light sources may be separated from the reflective surface by a separation distance. The separation distance may depend on the intensity of the one or more light sources and the sensitivity of the recording device. The distance may be such that one or more reflections on the reflective surface, each for one of the one or more light sources, are visible (*e.g*. constantly) to the recording device during the motion, without two reflections of the one or more reflections overlapping.

In examples, the one or more light sources emit light substantially continuously (i.e. do not blink). This increases the life expectancy of the one or more light sources.

The one or more light sources may comprise an array of light sources. The array may be a linear array. This means that multiple light sources are arranged in a straight and/or curved line. The array may be supported/mounted on a band. The band may be portable and/or rigid or semi-rigid.

This improves the provision of the image at S100. Indeed, during the capturing at S30, multiple reflections, each respective of one light source of the array, are formed on the reflective surface simultaneously. This allows a larger portion of the reflective surface to be covered in one motion.

In examples, the array is a linear array and two light sources of the array are separated by a gap (e.g. at least two, possibly all). Two distinct gaps in the array may have different lengths. This results in respective reflections on the reflective surface of two light sources of the array being separated by a space. This results in the paths represented in the image provided at S100 to have a separation. This allows the paths to be distinguishable from each other, thereby forming a geometrical pattern of lines on the image provided at S100. This improves the identification of structural imperfections with the neural network. Indeed, the separation makes more visible deformations of a path indicating the presence of a structural imperfection.

In examples, the space separating two reflections on the reflective surface may be shorter than the length of one of the two reflections (e.g. the diameter of the light spot of one of the two reflections), but at least with a length allowing the two reflections to be separated (e.g. such that the light spot of one of the two reflections does not touch or overlap with the light spot of the other reflection).

In examples, the band may have a length of or larger than half a meter or one meter. The band may comprise sixty light sources per meter. The gaps between the light sources may comprise a length between 0.2 and 1.5 centimeters. Thus, the band is easy to transport and move, facilitating the transport and operation of the one or more light sources.

An option of S40 is now discussed. Determining the image at S40 may, in this option, comprise aggregating the frames captured at S30. The aggregating allows to accurately determine the one or more paths represented in the image provided at S100. Indeed, the aggregating allows to trace with high accuracy the one or more paths followed by the reflection on the reflective surface of the one or more light sources throughout the motion of S20. Notably, the reflective surface is substantially fixed with respect to the video recording device during the capturing. The reflective surface thus provides a fixed reference for aggregating the frames. This increases accuracy and avoids introducing artifacts when determining the image. Indeed, the position of the reflective surface on the frames does not change. As such, a robust X/Y coordinate system can be defined to accurately position identified structural imperfections on the reflective surface. This avoids counting twice a single structural imperfection. In addition, the aggregation of frames is an operation which can be performed simply without requiring many computing resources. Aggregating the frames means that the frames are combined into one entity (*e.g*. a single frame or a single image). In examples, the aggregating may comprise aggregating parts of the frames into an initial frame. The initial frame may be any frame captured at S30. Alternatively the method may comprise capturing an initial frame before or after S30. For example, the initial frame may be captured after S10. The position of the video recording device and the reflective surface are identical when capturing the initial frame to their respective positions during the capturing S30. The aggregated parts may correspond to reflections (*e.g.* light spots), on the reflecting surface of the one or more light sources, captured in the frames. For example, the parts may correspond to a maximum brightness in the frames. This reduces the usage of computing resources as parts of the frames are aggregated instead of the entire frames. In examples, aggregating parts of the frames may be an automatic process and may comprise comparing first pixels of the initial frame with corresponding second pixels of each other frame captured during S30. Two corresponding pixels have a same location on a frame, and each belong to different frames. Aggregating parts of the frames may further comprise determining, for each other frame, pixels of the second pixels with a larger brightness (*e.*g. in gray scale) than corresponding pixels of the first pixels. Aggregating parts of the frames may further comprise aggregating (*e.g*. replacing pixels, combining pixels) the determined second pixels to the initial frame. The determining S40 may be performed in any other way than this option.

In examples, during the capturing at S30, two consecutive frames may be captured at a given time interval. The reflection on the reflective surface of a respective one of the one or more light sources may for example move 5 millimeters or less on the reflective surface during the given time interval.

This improves the quality of the determined image at S40. Indeed, if the frames of the reflective surface are captured too slowly with respect to the distance moved by the reflection on the reflective surface, then information on the path followed by the reflection on the reflective surface is lost. This may result in the paths represented on the image being disconnected. For example the paths represented on the image may comprise gaps. This increases the difficulty in identifying deviations of the paths which may decrease the accuracy of the identification of structural imperfections with the neural network.

This may impose constraints (*e.g*. increasing the recording speed) on the video recording device provided at S10 rather than slowing the relative motion between the one or more light sources and the reflective surface. This allows S20 to be performed rapidly, which increases the overall ergonomics and efficiency of providing of the image at S100.

At S20, putting the one or more light sources in motion may comprise sweeping the one or more light sources over the reflective surface. This means that the one or more light sources are moved. The sweeping may be performed automatically or may be performed manually.

This facilitates providing an image at S100. Indeed, it is simpler to move the one or more light sources than the reflective surface. Notably, the reflective surface is fixed relative to the video recording device. Thus, if the reflecting surface moves, the video recording device must move alongside the reflective surface.

In examples, the sweeping comprises sweeping the band which includes the array of light sources. Since the array of light sources are supported by the band, the sweeping is performed particularly simply.

The sweeping may be iterated in different directions. The position of the recording device with respect to the reflective surface remains unchanged. Thus, at different iterations, a reflection on the reflective surface of the one or more light sources may follow a different path on the reflective surface.

This results in that, at different iterations, the reflections on the reflective surface of the one or more light sources can follow different paths. This notably allows to create respective reflections for the one or more light sources on zones of the reflective surface which may have not been created during a different sweeping. Indeed, the geometry of the surface may stop the light emitted by the one or more light sources to reach a particular zone of the reflective surface if the one or more light sources are swept in a particular direction. Iterating the sweeping in different directions allows to not be limited by the geometry of the reflective surface.

At each iteration, the sweeping is performed so that at least one reflection of the one or more light sources is formed on the reflective surface.

In examples, the recording device may capture frames of the reflective surface for each iteration of the sweeping.

In examples, the sweeping is iterated at least once in a direction crossing the direction of the first sweeping (*e.g*. in a perpendicular direction) and the determining of the image is performed on frames captured for each iteration. This notably allows the pattern formed by the paths represented in the image provided at S100 to form a grid on the reflective surface.

The identifying at S200 may comprise, for each iteration of the sweeping, determining S40 a respective image and applying the neural network to at least a portion of the respective image.

This increases the accuracy of the identification of structural imperfections. Indeed, this allows to identify structural imperfections which may not have been identified on one of the respective images. This may be due to a particular deformation of the reflective surface at the neighborhood of the structural imperfection.

For example, in one iteration, a reflection on the surface of one of the one or more light sources may pass near/over the structural imperfection along a first direction during the recording. Due to the shape of the structural imperfection, the reflection is altered only slightly. This results in a first path followed by the reflection not comprising any significant deviations. Thus, applying the neural network to the representing this path may not identify the structural imperfection. However, in a second iteration, a reflection on the surface of one of the one or more light sources may pass near/over the structural imperfection along a second direction, different from the first, during the recording. In this second direction a second path followed by the reflection in the second iteration may be more deviated, at least sufficiently for the neural network, when applied to the image representing the second path, to identify the structural imperfection.

In examples, identifying S200 a number of structural imperfections comprises updating the number of structural imperfections identified in a previous iteration with structural imperfections identified in latter iterations and not identified in previous iterations. This allows the output of the method to be more accurate by taking into account each respective image determined at S40.

In examples, the neural network may be configured to determine a size (*e.g.* area) of an identified structural imperfection (*e.g*. in number of pixels or absolute size if a reference is provided). In examples, the updating comprises identifying, a position and an area corresponding to a size of a structural imperfection identified on a current iteration. The updating may further comprise comparing, the position and area with another position and another area corresponding to another size of another structural imperfection identified on a previous iteration. The updating may further comprise determining an overlap between the area and the other area (e.g. a percentage of any one of the area or the other area, for example the percentage with the highest value). The updating may further comprise comparing the overlap to a threshold (*e.g*. a predetermined value or an adjustable user defined value). In examples, the threshold may be 45% or 50%. If the overlap is larger than the threshold, then the smaller area is retained, and the position and area of the impact are updated accordingly. This increases the confidence score of the identified structural imperfections. The output of the method may then provide a more accurate number of identified structural imperfections and/or the location of each identified structural imperfection.

The method may also comprise extracting several portions of the image and applying the neural network to each portion individually.

This improves the performance of the neural network and increases the accuracy of the method. Indeed, neural networks work best with simple images. Extracting several portions of the image results in the portions to have less information (e.g. different shapes and geometries) than the entire image. Thus, applying the neural network to each portion (i.e. inputting each portion to the neural network) individually yields a more accurate identification of structural imperfections. This also allows to maintain high accuracy of detected structural imperfections when using a small neural network, for example a neural network having less that one hundred and one layers. Such a neural network improves the usage of computing resources with respect to a bigger neural network.

In examples, at least one portion of the image may be a square or a rectangle. The square or rectangle may have a dimension of n x m pixels, with n and m being smaller than 600 pixels and higher than 50 pixels. In examples, n and m may have an optimal size corresponding to an input layer of the neural network. In examples, the input layer has a size of 224x224 pixels (*e.g*. +/-10).

In examples, in each portion of the image at least two paths are represented.

In examples, the position of each portion with respect to the image is recorded (*e.g.* in volatile or in nonvolatile memory). This results in a structural imperfection identified on a portion of the reflective surface to be accurately located on the reflective surface.

In examples, a user may apply the method to multiple reflective surfaces of a vehicle (e.g. a car). The user performing the method may be provided with a rigid band comprising an array of light sources and a video recording device. The rigid band may for example have a length of one meter and a weight of some kilograms (less than 10 kg or 5 kg). The rigid band may be light enough to be handled manually by the user. The user may then position the video recording device in substantially in front of one of the multiple reflective surfaces of the vehicle (e.g. a portion of the side of the body of the vehicle, a door of the vehicle or any other reflective surface of the vehicle). The video recording device may be positioned at a distance allowing the video recording device to capture the reflective surface. Next, the user may sweep manually the rigid band over the reflective surface. The sweeping may be on any direction over the surface. For example, the sweeping of the band comprise transmitting a horizontal movement, with respect to the ground, to the rigid band. The rigid band then moves over (*e.g*. above) the reflective surface with the array of light sources facing the reflective surface during the sweeping. The video recording device captures frames of the surface comprising the reflections of the array of light sources of the rigid band formed on the reflective surface and moving on the reflective surface as the band is swept. A non-volatile memory may store the captured frames. The non-volatile memory may be communicatively coupled to the recording device and/or to a processor. An image may be determined, for example by aggregating the frames. On the determined image, paths followed by the reflections are visible. Then a processor may automatically extract several portions of the image. On each of the portions a part of the reflective surface with at least two paths may be visible. The processor may apply a neural network to each of the portions (*e.g*. automatically or as a result of a user action) and a number of structural imperfections on the reflective surface, along with the position of the structural imperfections, may be identified. The identified structural imperfections may be provided to the user (e.g. through graphical means by displaying/providing an image of the reflective surface (*e.g*. an image comprising all the extracted portions assembled)). The user may sweep one or more other times the rigid band over the reflective surface without changing the position of the reflective surface or the video recording device. For example, in one of the one or more other times, the user may sweep the rigid band in a vertical direction with respect to the ground. The video recording device may capture new frames for each of the one or more times the rigid band is swept over the surface. Each time the band may be swept so as to not enter in the field of view of the video recording device. Each time, a processor may determine a new image representing paths followed by reflections of the array of light sources on the rigid band, the reflections moving on the reflective surface as a result of each sweeping. For each new image, a processor may extract several new portions, and a neural network may be applied to each new portion. New structural imperfections identified in the new portions may update the number and position of previously identified structural imperfections on the reflective surface. The updated structural imperfections (*e.g*. number and location) may be provided to the user (e.g. by providing an image of the reflective surface indicating a total number of structural imperfections and/or highlighting the position of each structural imperfection on the reflective surface identified). The user may change the position of the video recording device so that it faces a different portion of a reflective surface of the vehicle (*e.g.* the front or back of the vehicle). The user may then repeat the method to identify structural imperfections on the different portion of a reflective surface. Notably, the user may sweep one or more times the rigid band over the different portion of a reflective surface in order to determine one or more images.

In examples, the neural network may be a convolutional neural network (CNN). This improves the accuracy of the method. Indeed, CNN work well at identifying features on images.

In examples, the CNN may be a regional convolutional neural network (RCNN).

RCNN allow accurate pattern recognition.

As known from the field of machine-learning, the processing of an input by the neural network includes applying operations to the input, the operations being defined by data which may including weight values. The learning of the neural network thus includes determining values of the weights based on a dataset configured for such learning. For that, the dataset includes data pieces each forming a respective training sample. The training samples represent the diversity of the situations where the neural network is to be used after being learnt.

It is thus notably proposed a computer-implemented method for training the neural network and optionally forming such a dataset.

The method being computer implemented means that the neural network, the dataset. One or more (*e.g*. all) data structures may each be non-transitorily recorded on a respective data storage medium.

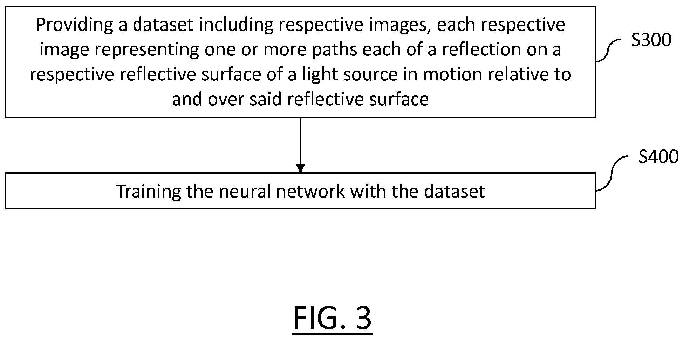

In reference to FIG. 3, an example of a training method for the neural network configured to provide an output number of structural imperfections in an input image will now be discussed.

The training method may comprise providing S300 a dataset. The dataset may include respective images. Each respective image may represent one or more paths each of a reflection on a reflective surface of a light source in motion relative to and over the reflective surface. The method may further comprise training the neural network with the dataset.

This allows the neural network to be trained to identify structural imperfections according to the method. Notably, the dataset comprises respective images similar to the image used as input for the neural network in the method. Thus, the accuracy and precision of the neural network trained on the dataset provided at S300 is very high.

In examples, training the training method may comprise extracting several portions of one or more images of the respective images of the dataset. The portions may be provided along with the dataset. Training the neural network with such a dataset further improves accuracy and precision of the trained neural network.

In example, at least some images of the dataset represent a reflective surface with one or more structural imperfections.

In examples, the reflective surfaces represented in the images may comprise reflective surfaces of vehicles (e.g. car, truck, motorcycle) and/or reflective surfaces of appliances.

In examples, the provided dataset is labeled with respective locations of structural imperfections.

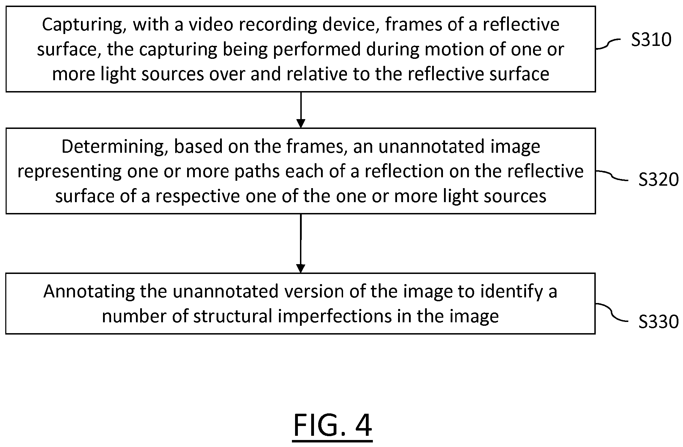

In reference to FIG. 4, providing S300 the dataset may comprise, for each respective image, capturing S310, with a video recording device, frames of a reflective surface. The capturing may be performed during motion of one or more light sources over and relative to the reflective surface. The video recording device may be fixed relative to the reflective surface during the capturing. Providing the dataset may further comprise determining S320, based on the frames, an unannotated image. The unannotated image represents one or more paths each of a reflection on the reflective surface of a respective one of the one or more light sources. Providing the dataset may further comprise, after the determining S320, annotating S330 the unannotated version of the image to identify a number of structural imperfections in the image.

Notably, the annotating at S330 does not require to have any prior knowledge on the reflective surface represented on the respective image or part of the respective image. Indeed, deviations of paths represented on a respective image resulting from a structural imperfection are visible and identifiable with the naked eye. As such, the annotating may not necessarily require a cross-verification with corresponding reflective surfaces. Thus the nature of the respective images facilitate the annotation of the respective images. The annotating S330 may thus be performed by a user manually and/or without any earlier-mentioned prior knowledge.

In examples, the annotating at S330 may comprise annotating structural imperfections (*e.g*. impacts) and annotating deviations of the one or more paths which do not result from structural imperfections. Such deviations may result, for example, from reflection artefacts and/or changes in curvature of the shape of the reflective surface. Annotating such deviations reduces false positive identifications of the neural network and improves accuracy and precision of the neural network trained with the dataset.

In examples, annotating the dataset at S330 may comprise annotating structural imperfections with different classes. Each class may comprise parameters defining the class. The parameters may include a range of values corresponding to an area of the reflective surface deformed by an individual structural imperfection. For example, the area may be defined as a disk on the reflective surface centered around the structural imperfection and the value may correspond to a radius/diameter of the surface. This allows the neural network to be configured to provide additional information on the reflective surface. Indeed, classifying the structural imperfections in such classes automatically provides to the user more detailed information on the current state of the reflective surface (e.g. the amount of damage/deformations to the reflective surface). This additional information is notably useful in view of repairing the reflective surface (e.g. tools for repairing a structural imperfection may vary depending on dimensions of the structural imperfection).

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

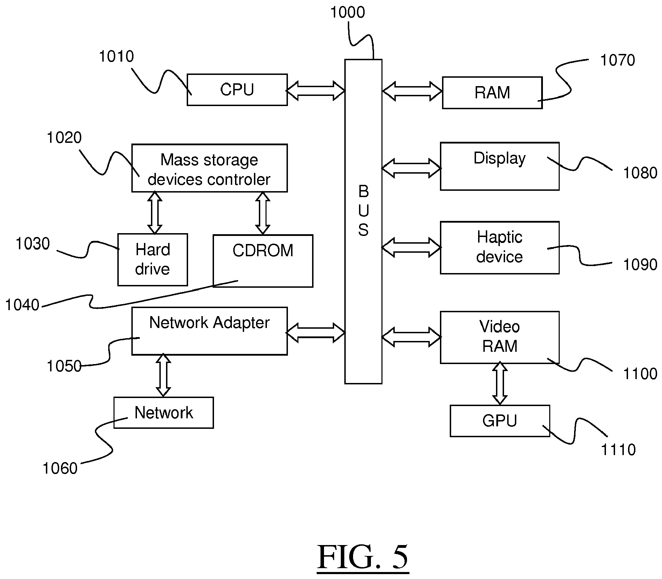

FIG. 5 shows an example of any system herein, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

Any computer program herein may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

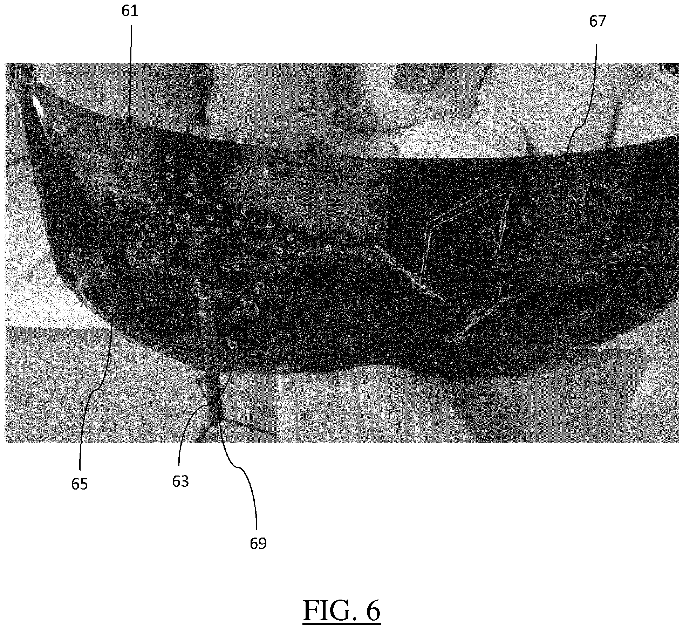

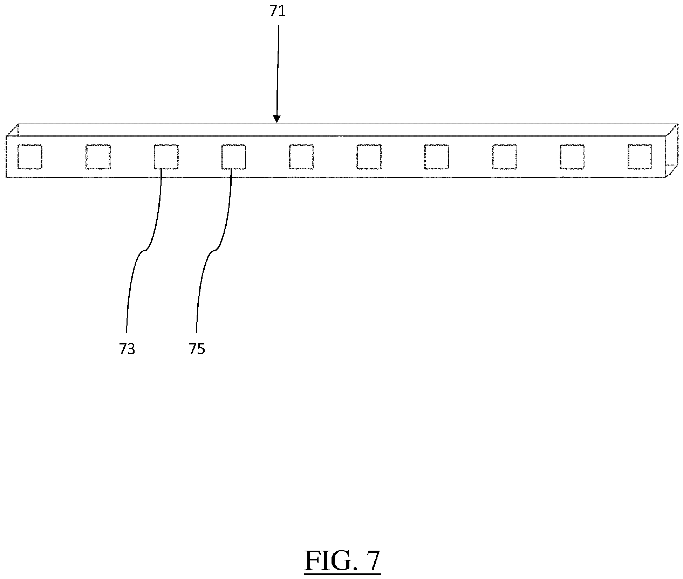

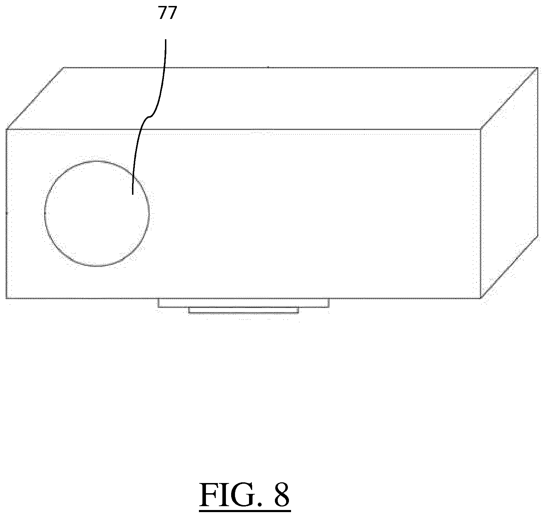

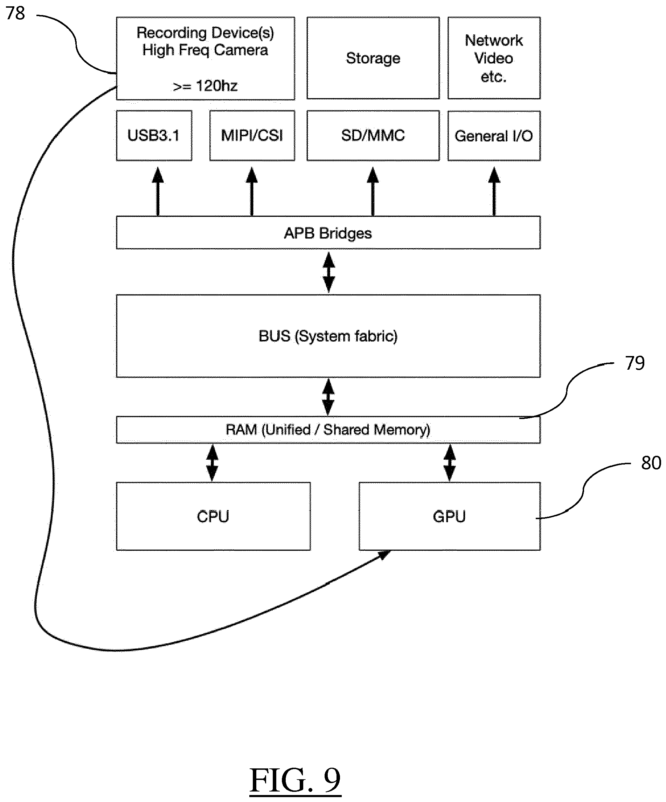

Examples of the method will now be discussed with reference to FIGs. 6-13. FIGs. 6-9 show examples of hardware which can be used with the method. FIG. 6 is a photograph showing an example of a reflective surface 61 and a support 69 for a video recording device. FIG. 7 represents a rigid band 71 that can be manually operated by a user. FIG. 8 shows an example of the anatomy of a component of a system comprising the video recording device which can be used in the method. The component comprises optical lens connected 77 to the video recording device. The video recording device may be an industrial vision camera, with high resolution, a high speed of speed of 125 frames/sec with an exposure time of +2000 milliseconds. The exposure time may be adjusted according to light environment. In examples, the video recording device may have a speed higher than 125 frames/sec. FIG. 9 is an example of a system comprising an architecture coupled to the video recording device 78 which allows real-time frame processing. A GPU compatible video recording device 78 transfers data through a host shared memory 79 to fast process frames using GPU compute capability (e.g. Debayering, JPG compression, resize, max light processing). Notably, this architecture results in no computing cost for (re)-allocation and/or memory and/or upload to the GPU 80 from the recording device 78. This allows the determining S40 to be processed real-time. In examples, the video recording device 78 may be communicatively coupled to a processor with a GPU Jetson Tx2. In examples, the video recording device 78 may comprise a WIFI antenna with an Orbitty connectivity card. In examples, the video recording device 78 may comprise a drone type Lippo battery.

Referring back to FIG. 6, in an example, the reflective surface 61 is provided. The reflective surface 61 is a hood of a vehicle. Optionally, on the reflective surface, a number of impacts (*e.g.* 63, 65, 67) have been surrounded by a circle to facilitate comparison with the results of the method. Optionally, a support 69 for a video recording device may be provided to fix the position of the video recording device. Different types of supports may also be used. Such types may include combinations of an articulated arm with a suction cup and/or combinations of a mobile structure with an articulated arm.

The method may comprise fixing the video recording device 78 on the support 69 at a distance allowing the video recording device to capture the reflective surface 61.

Referring now to FIG. 7, the user is also provided with a rigid band 71 comprising a linear array of LED (*e.g*. LED 73, 75). The band measures one meter and sixty LED 71, 73 are arranged on the band with a gap between each consecutive LED 73, 75 of one millimeter. The LED of the rigid band may be programmable. The LED may be communicatively coupled to a handheld controller, such as a Raspberry and/or an ARDUINO and/or any other handheld controller. The controller may comprise batteries.

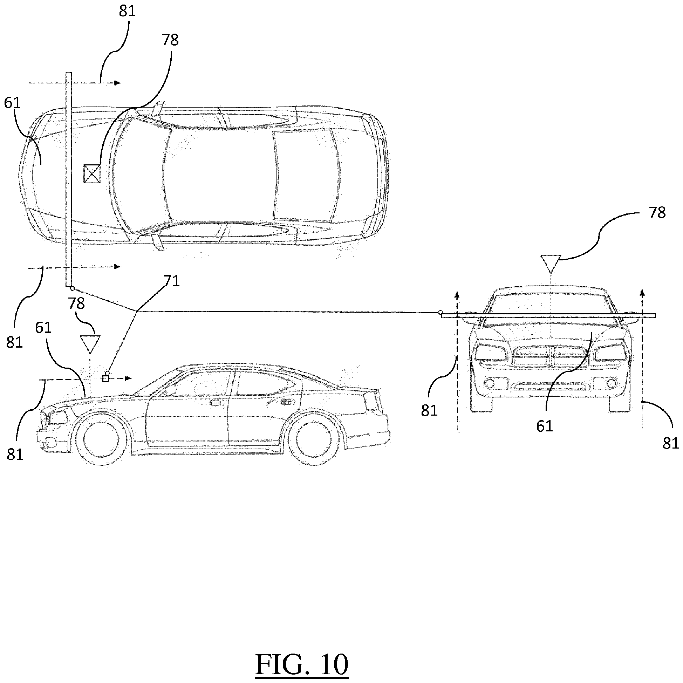

Referring now to FIG. 10, different views of an example of the determination of an image are shown. In this example, the reflective surface 61 is attached to the vehicle. The user positions the rigid band 71 at a separation distance from the reflective surface 61, which allows the video recording device 78 to capture frames of the reflective surface 61 which comprise at least two reflections on the reflective surface 61, each respective to one of two consecutive LEDs (*e.g*. LEDs 73 75) of the rigid band 71. The user then sweeps the rigid band 71 on a direction parallel to the ground in the direction of arrows 81, as if scanning the reflective surface. During the sweeping, the video recording device 78 captures frames of the reflective surface 61. The position of the video recording device 78 and the position of the reflective surface 61 are fixed when capturing the frames of the reflective surface 61. Next, the frames are sent to a system. The system may include the exemplary architecture of FIG. 9. The system automatically determines an image representing paths of the reflections. The determination yields similar result as "light painting" or "slow shutter" methods. Each path is a path followed by a moving reflection, on the reflective surface, of a LED of the rigid band 71.

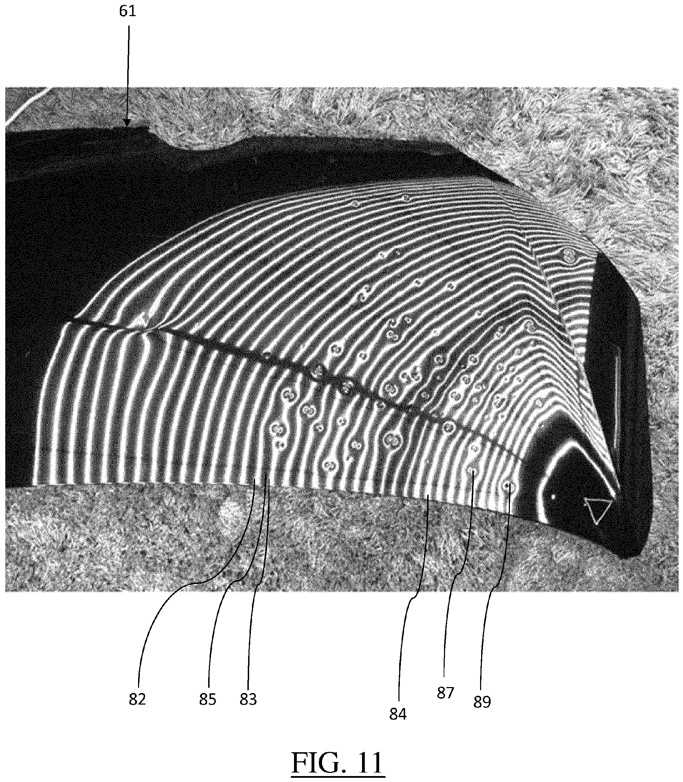

Referring now to FIG. 11, an example of a determined image representing paths on the reflective surface 61 is shown. In this example, the determination of the image was performed with the reflective surface 61 being separate from the vehicle. The image comprises multiple paths 82, 83, 84, visible on the reflective surface 61. Each path is separated from another by a gap 85 and the paths are distorted at the neighborhood of impacts 87, 89.

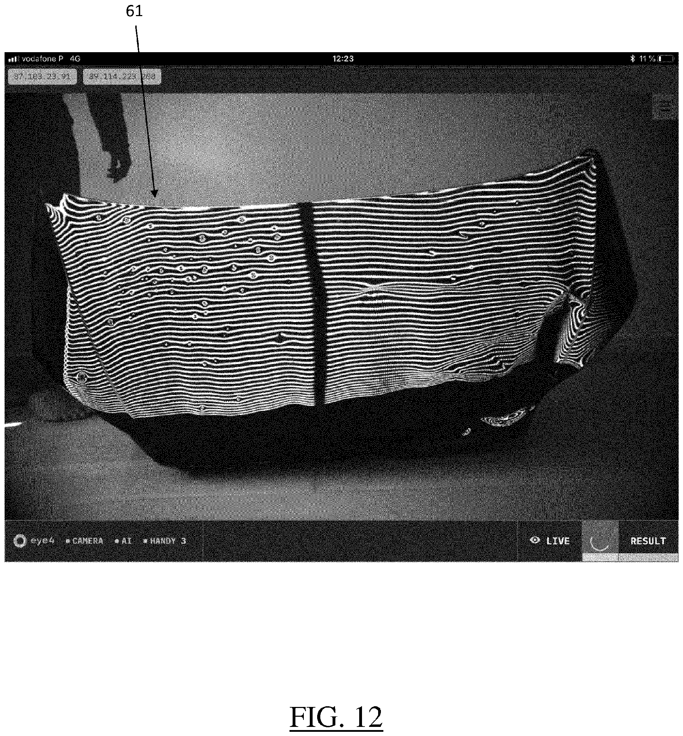

Referring now to FIG. 12, a screenshot of another example of a determined image representing paths on the reflective surface 61 is shown. After determining the image, the system may (*e.g.* after being prompted by a user input) extract several portions the determined image. The system may then apply a regional convolutional neural network (RCNN) to the extracted portions. The RCNN may be trained to identify only a certain class of impacts. For example, impacts smaller than a given length (e.g. one centimeter). The RCNN then identifies a number of impacts on the reflective surface 61 which correspond to the certain class. The RCNN further determines a position of each identified impact. The portions are then combined, and the results are provided and/or displayed to the user (e.g. with a display coupled to the processor).

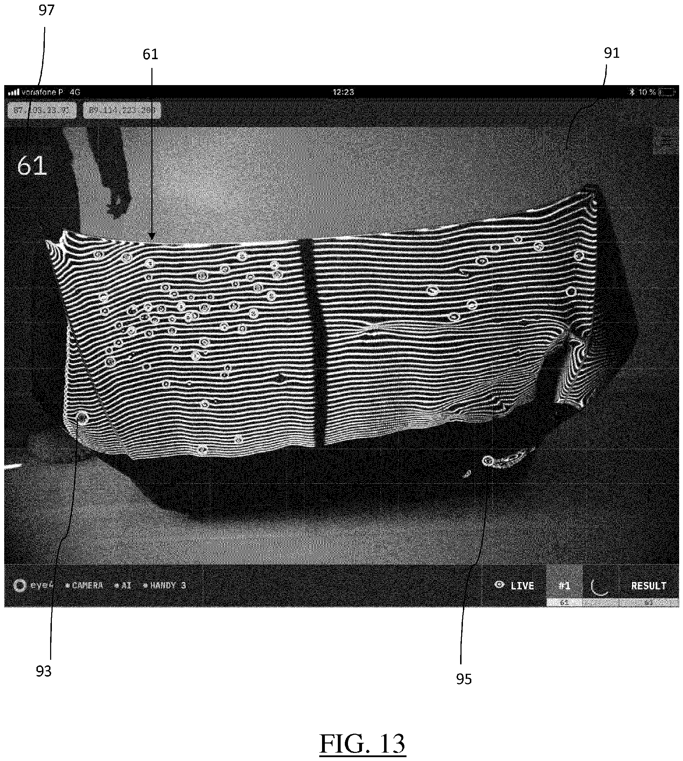

FIG. 13 is a screenshot of an example of the provided and/or displayed results. The grid 91 indicates the joining of two portions. The circles 93, 95 correspond to the position of the different impacts of the certain class identified by the RCNN on the reflective surface 61. The tally 97 indicates the number of identified impacts, which in this case is sixty-one.

Repairs based on the provided results can be performed more easily and efficiently as the number, position and information on size of impacts (*e.g*. the associated class) is provided with the results.

## Claims

1. A computer-implemented method for identifying structural imperfections on a reflective surface, the method comprising:
• providing (S100) an image, the image representing one or more paths each of a reflection on the reflective surface of a light source in motion relative to and over the reflective surface; and
• identifying (S200) a number of structural imperfections in the image with a neural network configured to provide an output number of structural imperfections in an input image, the identifying comprising applying the neural network to at least a portion of the image.

2. The computer-implemented method of claim 1, wherein the one or more paths form a geometrical pattern.

3. The computer-implemented method of claim 1 or 2, wherein the providing (S100) of the image comprises:
• providing (S10) a video recording device and one or more light sources;
• putting (S20) the one or more light sources in motion relative to and over the reflective surface;
• capturing (S30), with the video recording device and during the motion of the one or more light sources, frames of the reflective surface, the video recording device being fixed relative to the reflective surface during the capturing; and
• determining (S40) the image based on the frames, each path being of a reflection on the reflective surface of a respective one of the one or more light sources.

4. The computer-implemented method of claim 3, wherein the one or more light sources comprise an array of light sources.

5. The computer implemented method of claim 3 or 4, wherein putting the one or more light sources in motion comprises sweeping the one or more light sources over the reflective surface.

6. The computer-implemented method of claim 5, wherein the sweeping is iterated in different directions, a position of the recording device with respect to the reflective surface remaining unchanged.

7. The computer-implemented method of claim 6, wherein the identifying comprises, for each iteration of the sweeping, determining a respective image and applying the neural network to at least a portion of the respective image.

8. The computer-implemented method of any one of claims 3 to 7, wherein determining the image comprises aggregating the frames.

9. The computer-implemented method of any one of claims 3 to 8, wherein during the capturing:
• two consecutive frames are captured at a given time interval; and
• the reflection on the reflective surface of a respective one of the one or more light sources moves 5mm or less on the reflective surface during the given time interval.

10. The computer-implemented method of any one of claims 1 to 9, wherein the method comprises:
• extracting several portions of the image; and
• applying the neural network to each portion individually.

11. The computer-implemented method of any one of claims 1 to 10 wherein the structural imperfections on the reflective surface are impacts, and/or the reflective surface is a body surface of a vehicle.

12. A computer-implemented method for training a neural network configured for the identifying of any one of claims 1 to 11, the method comprising:
• providing (S300) a dataset including respective images, each respective image representing one or more paths each of a reflection on a reflective surface of a light source in motion relative to and over the reflective surface; and
• training (S400) the neural network with the dataset.

13. The computer-implemented method of claim 12, wherein providing the dataset comprises for each respective image:
• capturing, with a video recording device, frames of a reflective surface, the capturing being performed during motion of one or more light sources over and relative to the reflective surface, the video recording device being fixed relative to the reflective surface during the capturing;
• determining, based on the frames, an unannotated image representing one or more paths each of a reflection on the reflective surface of a respective one of the one or more light sources; and then
• annotating the unannotated version of the image to identify a number of structural imperfections in the image.

14. A computer program comprising instructions for performing the method of any one of claims 1 to 11 and/or the method of any one of claims 12 to 13.

15. A computer system comprising a processor coupled to a memory, the memory having recorded thereon the computer program of claim 14.
